# EUROPÄISCHE PATENTSCHRIFT

(11) **EP 3 466 512 B1**
(45) Veröffentlichungstag und Bekanntmachung des Hinweises auf die Patenterteilung: **29.04.2020**
(21) Anmeldenummer: 17195458.9
(22) Anmeldetag: 09.10.2017
(51) Int. Cl.: B01D 15/24, B01D 15/40, G01N 30/82

(54) **SAMMLERMODUL FÜR EIN SFC-SYSTEM**
COLLECTOR MODULE FOR AN SFC SYSTEM
MODULE COLLECTEUR POUR UN SYSTÈME SFC

(43) Veröffentlichungstag der Anmeldung: 10.04.2019
(73) Patentinhaber: SEPIAtec GmbH, 12487 Berlin (DE)
(72) Erfinder: Gumm, Holger, 14558 Nuthetal OT Bergholz-Rehbrügge (DE)
(74) Vertreter: Gulde & Partner

(56) Entgegenhaltungen:
- EP-A1- 2 168 647
- WO-A1-2012/174437
- US-A- 5 690 828
- US-A- 5 785 856
- US-A1- 2017 276 654

## Beschreibung

Die Erfindung betrifft ein Sammlermodul für ein präparatives SFC-System, das das automatisierte Sammeln einer Vielzahl von Fraktionen ermöglicht.

### Technologischer Hintergrund

Die überkritische oder auch superkritische Flüssigkeitschromatographie (Abk. SFC, engl. supercritical fluid chromatography) wird in der Regel als analytisches Nachweisverfahren betrieben. Bei der SFC werden mobile Phasen verwendet, die sich jenseits der stoffspezifischen kritischen Temperatur und des kritischen Druckes befinden. Als mobile Phase können Gase, wie CO₂, N₂O, C₂F₆ etc., im überkritischen Zustand verwendet werden. In der Praxis dominiert der Einsatz von CO₂, das allerdings sehr unpolar ist und nur ein geringes Lösungsvermögen besitzt. Für die Trennung und Elution von Analyten ist es damit meistens notwendig, die mobile Phase durch eine polare Komponente zu erweitern und so die Elutionskraft zu erhöhen. Als sogenannte Modifier kommen hierfür am häufigsten Methanol, Ethanol und Isopropanol zum Einsatz. Sollten Trennung oder Peak-Form durch Modifierzusatz noch nicht ausreichend gut sein, besteht die Möglichkeit Additive zuzusetzen. Dies sind Salze, Säuren oder Basen, die die Interaktionen von Analyt und stationärer bzw. mobiler Phase beeinflussen können.

Im Allgemeinen verwendet man als stationäre Phasen die bekannten Materialien aus der Gaschromatographie und HPLC, zum Beispiel Kieselgele oder Polysiloxane oder speziell für die SFC entwickelte Materialien. Dabei kann die stationäre Phase ein Feststoff oder Flüssigkeit in Form eines dünnen Films auf einem Trägermaterial sein.

Die Druckregelung und Förderung der mobilen Phase erfolgt in der Regel über Kolbenpumpen. Das Einspritzsystem für die Proben ist wie bei der HPLC zumeist ein Mehrwegeventil mit kleiner interner Probenschleife. Die Temperatur kann über einen Säulenofen geregelt werden. Ein Rückdruckregler befindet sich am Ende der Säule und soll den erforderlichen Mindestdruck für den überkritischen Zustand bis zum Säulenende gewährleisten. Der eingesetzte Detektor ist abhängig von der mobile Phase und dem Analyten. Bei gemischten Phasen aus CO₂ und Modifier werden beispielsweise häufig UV/VIS-Detektoren eingesetzt.

Mit der SFC lassen sich beispielsweise analytische Probleme behandeln, für die Gas- oder Flüssigchromatographie nicht mehr anwendbar sind. Vorteile der SFC liegen ferner in der geringeren Analysentemperatur, wodurch das Auftreten thermischer Artefakte minimiert wird. Außerdem ist die Geschwindigkeit der Trennung gegenüber einer klassischen HPLC meist schneller und die SFC lässt sich, verglichen mit der Gaschromatographie, auch bei geringer Flüchtigkeit der Probenkomponenten anwenden.

Von zunehmendem Interesse sind präparative SFC-Anlagen, die eine gezielte Auftrennung und Konzentration einzelner Komponenten im präparativen Maßstab ermöglichen. Dazu ist eine Fraktionierung der mobilen Phase nach dem Detektor notwendig. Vorher müssen Gas und Flüssigkeit der mobilen Phase getrennt werden. Letzteres wird durch im Produktstrom installierte Gas-Flüssigkeits-Abscheider erreicht, die eine Abtrennung des Gases aus der mobilen Phase erlauben. Die zu sammelnden Komponenten befinden sich dann in der abgetrennten Flüssigkeit.

In den von der Anmelderin kommerziell vertriebenen präparativen SFC-Systemen basiert die Fraktionierung auf der Umlenkung des Produktstromes zu Gas-Flüssigkeits-Abscheidern, von deren Auslässen jeweils eine Kapillare zu einem Fraktionsgefäß führt. Die Fraktionierung wird durch das Umschalten eines Mehrwegeventils erreicht. Die Anzahl der Fraktionen ist auf die Anzahl der verbauten Gas-Flüssigkeits-Abscheider begrenzt (zum Beispiel 8 für Sammelfraktionen, 1 für Abfall). Diese technische Konfiguration ist insbesondere optimiert für die Trennung von chiralen Substanzen, bei der nur wenige Fraktionen gesammelt werden. Bei Trennungen von achiralen Substanzen können sich weitaus mehr Fraktionen ergeben, was die Bereitstellung einer größeren Anzahl von Fraktionsgefäßen erforderlich macht.

US 2014/021703 A1 beschreibt ein präparatives SFC-System, bei dem ein einziger, stationär angebrachter Gas-Flüssigkeits-Abscheider kontinuierlich arbeitet. Die Sammlung der Fraktionen erfolgt über eine längere Kapillare, die vom Auslass des Gas-Flüssigkeits-Abscheiders zu einem in XY-Richtung fahrbaren Roboterarm führt, der die Positionen einer größeren Anzahl von Fraktionsgefäßen ansteuern kann (so genannte "Open Bed"-Anordnung). Der Flüssigausgang bewegt sich demnach über die Fraktioniergefäße. Ein Mehrwegeventil befindet sich stromaufwärts des Fraktionssammlers. Der Gas-Flüssigkeits-Abscheider ist über eine lange Kapillare mit dem Roboterarm verbunden. Nachteilig ist, dass eine lange Kapillare mit einem hohen Transfervolumen einhergeht, so dass eine Rückvermischung der getrennten Probe durch Diffusion in der Kapillare erfolgen kann.

Weiterhin ändert sich im Gradientenbetrieb der Fluss in dieser Kapillare.

Die Firma Jasco, Japan, bietet ein (semi-)präparatives SFC-System (Handelsname LC-4000 Series) für achirale Trennungen an. Dabei wird nach der Trennsäule eine flexible Kapillare zu einer Nadel geführt, die an einem XY-Roboterarm angebracht ist. Diese Nadel taucht jeweils von oben in einen miniaturisierten Gas-Flüssigkeits-Abscheider ein, der direkt auf einem Fraktionsgefäß angebracht ist (US 2010/0077874 A1). Der Hersteller gibt an, dass auf diese Weise bis zu 56 Fraktionsgefäße befüllt werden können.

US 2001/013494 A1 beschreibt ein weiteres präparatives SFC-System, bei dem waschbare und automatisiert wechselbare Gas-Flüssigkeits-Separatoren, deren Spitzen in Fraktioniergefäße tauchen, durch ein stromaufwärts vorhandenes Mehrwegeventil angesteuert werden.

US 7,909,993 B2 beschreibt ein präparatives SFC-System, bei dem die Trennung von Gas und Flüssigkeit und auch die Sammlung des Fraktionsvolumens zeitgleich in einem sich bewegenden Rotor erfolgen.

Nach dem Stand der Technik erfolgt somit zum Einen die Fraktionierung durch Umschalten eines Mehrwegeventils, derart, dass der Produktstrom zu einer begrenzten Anzahl von fixierten Gas-Flüssigkeits-Abscheidern umgeleitet wird, die CO₂ abscheiden und Lösungsmittel mit gelösten Substanzen in fest verbundene Fraktioniergefäße leiten. Zum Anderen kann auch ein einzelner, fixierter Gas-Flüssigkeits-Abscheider über eine lange Kapillare mit einem XY-Fraktionssammler verbunden werden. Dies führt jedoch zu Rückvermischung der Fraktionen in der langen Kapillare. Außerdem muss bei Gradientenbetrieb (ansteigender Anteil an organischem Lösungsmittel im CO₂-Strom über die Zeit) ausgleichend Lösungsmittel über eine Dosierpumpe zugemischt werden, um den Volumenstrom am Flüssig-Ausgang des Gas-Flüssigkeits-Abscheiders konstant zu halten. Andernfalls müsste die Verweilzeit des Lösungsmittels zwischen Gas-Flüssigkeits-Abscheider und Austritt am Fraktionssammler aufwendig berechnet werden. Dadurch kann es zu einem höheren Verbrauch an Lösungsmittel im Gradienten-Betrieb kommen.

Es besteht anhaltender Bedarf für ein präparatives SFC-System, das das automatisierte Sammeln einer Vielzahl von Fraktionen in einen Fraktioniergefäßhalter ermöglicht, ohne dass es zum Beispiel durch Aerosolbildung zur Kontamination anderer Fraktionen kommt.

### Zusammenfassung der Erfindung

Ein oder mehrere Nachteile herkömmlicher SFC-Systeme werden mit Hilfe des erfindungsgemäßen Sammlermoduls für ein SFC-System gelöst oder zumindest gemindert. Das erfindungsgemäße Sammlermodul umfasst dazu:
einen Gas-Flüssigkeits-Abscheider, der stromabwärts eines Rückdruckreglers im Flussweg angeordnet ist;
ein Mehrwegeventil, das direkt stromabwärts an einem Auslass des Gas-Flüssigkeits-Abscheiders montiert ist und dazu ausgelegt ist, den eintretenden Flüssigkeitsstrom entweder über eine Kapillare in ein Fraktioniergefäß, das unter dem Gas-Flüssigkeits-Abscheider positioniert ist, oder in ein Abfallgefäß zu leiten; wobei
   (i) der Gas-Flüssigkeits-Abscheider, das Mehrwegeventil und die Kapillare ausgelegt sind eine gemeinsame vertikale Bewegung auszuführen, derart, dass eine Spitze der Kapillare in eine Öffnung des Fraktioniergefäßes eintaucht und wieder herausfährt; oder
   (ii) der Gas-Flüssigkeits-Abscheider fest montiert ist und das Mehrwegeventil und die Kapillare ausgelegt sind eine gemeinsame vertikale Bewegung auszuführen, derart, dass eine Spitze der Kapillare in eine Öffnung des Fraktioniergefäßes eintaucht und wieder herausfährt; oder
   (iii) der Gas-Flüssigkeits-Abscheider und das Mehrwegeventil fest montiert sind und die Kapillare ausgelegt ist eine vertikale Bewegung auszuführen, derart, dass eine Spitze der Kapillare in eine Öffnung des Fraktioniergefäßes eintaucht und wieder herausfährt; und
einen Fraktioniergefäßhalter für eine Vielzahl von Fraktioniergefäßen, die elektrisch oder pneumatisch nacheinander unter der Spitze der Kapillare positionierbar sind.

Die Komponenten Gas-Flüssigkeits-Abscheider, Mehrwegeventil und Kapillare sind demnach in drei Alternativen beweglich am Sammlermodul montiert. Nach einer ersten Alternative (i) werden alle drei Komponenten gemeinsam vertikal beweglich montiert. Alternative (ii) sieht vor, dass sich nur noch das Mehrwegeventil und die Kapillare bewegen lassen, während der Gas-Flüssigkeits-Abscheider am Sammlermodul fixiert ist. Ferner ist gemäß Alternative (iii) nur die Kapillare beweglich gelagert. Alle Ausführungsformen erlauben ein "Eintauchen" der Austrittskapillare in das Fraktioniergefäß.

Das Mehrwegeventil ist - gegenüber der üblichen Position stromaufwärts des Gas-Flüssigkeits-Abscheiders - vorliegend nun direkt am Auslass des Gas-Flüssigkeits-Abscheiders angeordnet und wird dazu verwendet, den Strom des organischen Lösungsmittels entweder in das Fraktioniergefäß, das aktuell unter dem Gas-Flüssigkeits-Abscheider positioniert ist, oder einen Abfallbehälter zu leiten. Dadurch kann das Transfervolumen vom Gas-Flüssigkeits-Abscheider zu den Fraktioniergefäßen sehr klein gehalten werden.

Durch das Eintauchen der Kapillarspitze in die Fraktioniergefäße wird eine Kontamination anderer Fraktionen durch Aerosolbildung verhindert. Durch das sehr kleine Transfervolumen am Auslass des Gas-Flüssigkeits-Abscheiders ist ferner eine Zufügung von organischem Lösungsmittel über eine Dosierpumpe nur bei Trennungen mit niedrigem Modifier-Gehalt nötig (in der Regel <5%). Das senkt den Lösungsmittelverbrauch und verhindert ein unnötiges Verdünnen der Fraktionen.

Zur Durchführung der vertikalen Bewegung gemäß der oben genannten Alternativen (i) bis (iii) kann ein entsprechend ausgelegter Roboterarm dienen. Alternativ kann diese vertikale Bewegung auch durch eine Drehbewegung eines Fraktioniergefäßhalters erzwungen werden, zum Beispiel durch ein entsprechendes Wellenprofil am Rand des Fraktioniergefäßhalters, das eine mechanische Bewegung der Komponenten entsprechend der Alternativen (i) bis (iii) bewirkt.

Die Fraktioniergefäße stehen in einem Fraktioniergefäßhalter, der automatisch ein Fraktioniergefäß unter der Kapillarspitze positionieren kann. Die Anzahl und Größe der Fraktioniergefäße können variiert werden. Der Fraktioniergefäßhalter ist also vorzugsweise rund und weist im Umfang des Fraktioniergefäßhalters angeordnete Aufnahmen für die Fraktioniergefäße auf.

Ein Sammlermodul im Sinne der Erfindung ist demnach ein automatisch oder halbautomatisch arbeitendes Modul zum Auffangen von Fraktionen, die bei der SFC-Trennung (Fraktionierung) eines Stoffgemisches anfallen. Eine Steuerung bewirkt beispielsweise den Wechsel der Fraktioniergefäße a) in einer bestimmten zeitlichen Frequenz, b) bis zum Auffangen eines eingestellten Fraktionsvolumens oder c) in Folge der Detektion eines (bestimmten) Signals durch einen dem Fraktionssammler vorgeschalteten Detektor.

Die Fraktionierung findet im erfindungsgemäßen Sammlermodul nicht, wie zum Beispiel bei einigen herkömmlichen SFC-Systemen für chirale Anwendungen, durch Umschalten des Mehrwegeventils statt, sondern durch schrittweise Drehung des gegebenenfalls runden Fraktioniergefäßhalters. Dadurch ist die Anzahl der möglichen Fraktionen größer, verglichen mit der Anordnung bei der jeweils ein Gas-Flüssigkeits-Separator mit einem Fraktioniergefäß verbunden ist. Die Anzahl der Fraktionen und das maximale Volumen sind abhängig von der Gestaltung des Halters. Dieser kann in unterschiedlichen Ausführungen hergestellt werden, etwa zur Aufnahme kleiner Röhrchen oder für kleine Flaschen.

Das Sammlermodul wird vorzugsweise so konstruiert, dass es möglich ist, ein optionales Sortiermodul anzuschließen. Dafür wird beispielsweise eine Grundplatte, auf der der Fraktioniergefäßhalter angebracht ist, so ausgestaltet, dass sie auf einer Seite über ein Profil des Sammlermoduls hinausragt. Dadurch ist es möglich, dass ein Greifer über das äußerste Fraktioniergefäß fahren und dieses aufnehmen kann. Das Sortiermodul kann, je nach Ausführung, unterschiedliche Anwendungen realisieren.

Die grundlegendste Anwendung ist das Austauschen von gefüllten Fraktioniergefäßen aus dem Sammlermodul mit frischen Fraktioniergefäßen aus einem optionalen Sortiermodul, um die Anzahl der sammelbaren Fraktionen zu erhöhen. Das Sortiermodul kann mehrere Fraktioniergefäßhalter aufnehmen, die während des Betriebs durch den Anwender getauscht werden können.

Weitere bevorzugte Ausgestaltungen lassen sich der nachfolgenden Beschreibung entnehmen.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1: Ein Fließschema eines erfindungsgemäßen präparativen SFC-Systems nach einer Ausführungsform mit optionalem Sortiermodul mit rechteckigem Fraktioniergefäßhalter;
- Fig. 2: Eine schematische Darstellung der vertikalen Bewegung von Gas-Flüssigkeits-Abscheider, Mehrwegeventil und Kapillare gemäß der Alternative (i) des erfindungsgemäßen Sammlermoduls;
- Fig. 3: Eine schematische Darstellung der vertikalen Bewegung von Mehrwegeventil und Kapillare gemäß der Alternative (ii) des erfindungsgemäßen Sammlermoduls;
- Fig. 4: Eine schematische Darstellung der vertikalen Bewegung der Kapillare gemäß der Alternative (iii) des erfindungsgemäßen Sammlermoduls; und
- Fig. 5: Eine Vergrößerung der in Figur 4 dargestellten Mechanik zur vertikalen Bewegung der Kapillare gemäß der Alternative (iii) des erfindungsgemäßen Sammlermoduls.

### Detaillierte Beschreibung der Erfindung

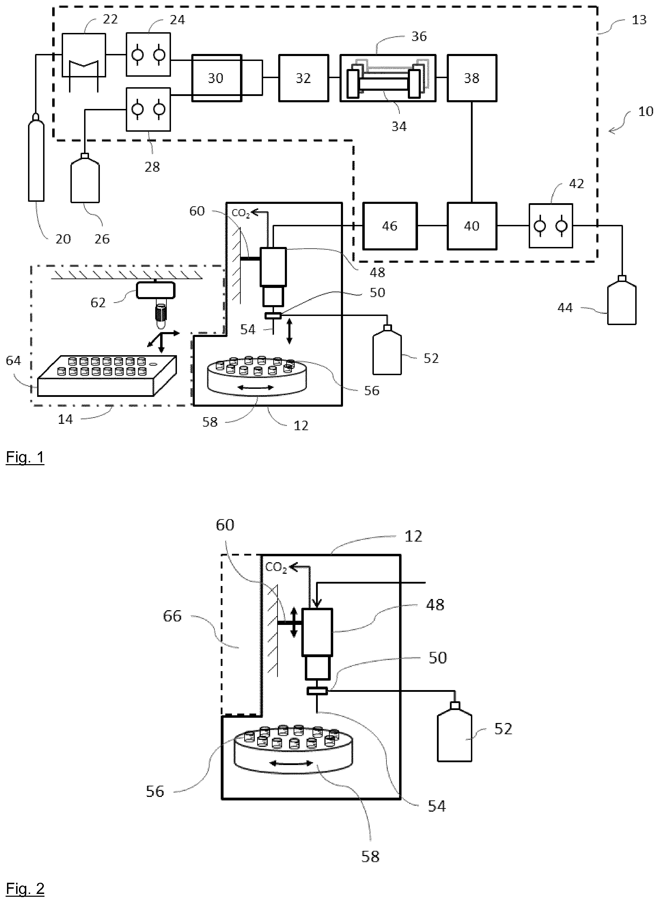

Figur 1 zeigt ein Fließschema eines präparativen SFC-Systems 10 nach einer Ausführungsform der Erfindung. Das SFC-System 10 umfasst hier ein Sammlermodul 12, ein Trennmodul 13 und ein optionales Sortiermodul 14.

Als mobile Phase in der präparativen SFC werden üblicherweise Mischungen aus CO₂ bei überkritischen Bedingungen und einem organischen Lösungsmittel (Modifier) verwendet. Das CO₂ wird aus einer Druckflasche 20 flüssig entnommen und in einem Wärmetauscher 22 abgekühlt. Das kalte CO₂ wird mit einer Pumpe 24 gefördert. Organisches Lösungsmittel wird aus einem Lösungsmittelbehälter 26 entnommen und mit einer Pumpe 28 gefördert. Organisches Lösungsmittel und CO₂ werden in der Vorheizung 30 erhitzt und anschließend gemischt und bilden so die mobile Phase. Der gemischte Strom durchläuft einen Autosampler 32, in dem automatisch eine definierte Menge Probe zugegeben wird. Die Probe wird mit der mobilen Phase transportiert und durch eine Säule 34 in ihre Bestandteile aufgetrennt. Ein Säulenofen 36 kann für die Aufnahme einer unterschiedlichen Anzahl von Säulen konfiguriert werden.

Die Bestandteile der Probe werden in einem Detektor 38 erfasst. Das System kann mit unterschiedlichen Detektoren ausgestattet sein, zum Beispiel einem UV/VIS-DAD-Detektor, einem sogenannten Evaporative Light Scattering Detector (ELSD), einem Flammenionisationsdetektor, einem Massenspektrometer oder einem Fluoreszenzdetektor.

Die mobile Phase passiert anschließend einen Rückdruckregler 40, der den Druck stromabwärts der Säule 34 konstant hält. Der Druck kann vom Benutzer gewählt werden und wird automatisch geregelt. Gegebenenfalls wird im Rückdruckregler 40 mit Hilfe einer weiteren Pumpe 42 aus einem Lösungsmittelbehälter 44 zusätzlich organisches Lösungsmittel zugegeben. Pumpe 42 ermöglicht Trennungen mit reinem CO₂ ohne Zugabe von Modifier. Das zugegebene Lösungsmittel dient dabei zum Bilden einer flüssigen Phase, die die Probensubstanzen aufnimmt und die am Flüssigausgang aufgefangen werden kann.

Eine Nachheizung 46 erhitzt die mobile Phase nach Austritt aus dem Rückdruckregler 40, um der Abkühlung durch die Dekompression im Rückdruckregler 40 entgegenzuwirken und einen zuverlässigen Betrieb der nachgeschalteten Komponenten zu gewährleisten. Das Trennmodul 13 umfasst vorliegend die Pumpen 24, 28, die Vorheizung 30, den Autosampler 32, den Säulenofen 36, den Detektor 38, den Rückdruckregler 40, die Pumpe 42 und die Nachheizung 46. Das Trennmodul 13 weist ferner Anschlüsse für die CO₂-Druckflasche 20 und die Lösungsmittelbehälter 26 und 44 auf.

Die mobile Phase tritt als zweiphasiger Strom (gas-flüssig) in einen Gas-Flüssigkeits-Abscheider 48 ein, wo die flüssige Phase, bestehend aus Modifier und gelösten Probenbestandteilen, am unteren Teil des Gas-Flüssigkeits-Abscheiders 48 austritt und das gasförmige CO₂ am oberen Teil austritt.

Am unteren Ende des Gas-Flüssigkeits-Abscheiders 48 ist ein Mehrwegeventil 50, hier beispielhaft in Form eines Zwei-Wege-Ventils, angeordnet. Durch das Zwei-Wege-Ventil wird gewählt, ob die Flüssigkeit in den organischen Abfallbehälter 52 oder in eine nachgeordnete Kapillare 54 geleitet wird und von dort gesammelt wird. Das Sammeln erfolgt durch automatisches Platzieren eines Fraktioniergefäßes 56 unter dem Auslass der Kapillare 54 durch computergesteuertes Drehen eines runden Fraktioniergefäßhalters 58. Der Fraktioniergefäßhalter 58 kann je nach Anzahl und Volumen der zu sammelnden Fraktionen gewechselt werden.

Der Gas-Flüssigkeits-Abscheider 48 ist an einem vertikal beweglichen Roboterarm 60 angebracht. Dadurch kann die Kapillare 54 in das Fraktioniergefäß 56 beim Sammeln der Fraktion eintauchen, wodurch eine Verunreinigung der benachbarten Fraktioniergefäße durch Aerosolbildung und Spritzen verhindert wird.

Das Sammlermodul 12 ist so konstruiert, dass optional ein Sortiermodul 14 angeschlossen werden kann. Durch das Vorstehen der Einheit, die den Fraktioniergefäßhalter 58 trägt, der Greifer 62 des Sortiermoduls 14 so über den Fraktioniergefäßhalter 58 fahren, dass ein Fraktioniergefäß 56 aufgenommen werden kann bzw. in einen leeren Platz eingestellt werden kann. Dadurch können gefüllte Fraktioniergefäße 56 aus dem Sammlermodul 12 entnommen werden und leere (oder teilgefüllte) aus einem Fraktioniergefäßhalter 64 des Sortiermoduls 14 eingestellt werden. Da der Fraktioniergefäßhalter 64 im Sortiermodul 14 durch den Anwender im laufenden Betrieb ausgetauscht werden kann, ist auf diese Art theoretisch das Sammeln einer unbegrenzten Anzahl von Fraktionen möglich. Das Sortiermodul 14 ist auf Grundlage eines Greifsystems mit einem beweglichen Greifer 62 konstruiert. Das Sortiermodul 14 kann mit einem Wägesystem ausgestattet werden, das es erlaubt das Gewicht von Fraktionen zu bestimmen, zu speichern und mit anderen Fraktionen zu vergleichen. Das Sortiermodul 14 kann Fraktioniergefäße 56 im Fraktioniergefäßhalter 64 des Sortiermoduls 14 umstellen oder Fraktioniergefäße 56 vom Sortiermodul 14 zum Sammlermodul 12 transportieren und umgekehrt. Der Fraktioniergefäßhalter 64 des Sortiermoduls 14 hat hier eine rechteckige Grundform, ist jedoch nicht auf diese Grundform beschränkt.

Weitere Anwendungsmöglichkeiten, die mit Hilfe des Sortiermoduls 14 realisierbar sind, umfassen zum Beispiel die Weiteranalyse in einem Massenspektrometer, eine nachfolgende chromatographische Trennung oder die automatische Vorbereitung der Fraktioniergefäße zur Trocknung der Fraktionen in einer Vakuumzentrifuge. Der Vorteil des Sortiermoduls 14 besteht dabei darin, dass die Proben durch Vorsortierung leicht durch den Anwender in ein weiteres Gerät zu überführen sind oder die Fraktioniergefäßhalter 64 aus dem Sortiermodul 14 direkt in ein weiteres Gerät eingestellt werden können.

Die Bauform der Module 12, 13 und 14 ist vorzugsweise so gewählt, dass das gesamte SFC-System in einem Standard-Labor-Abzug (Systembreite < 1,5 m) installiert werden kann.

Die Figur 2 gibt das Sammlermodul 12 des SFC-Systems 10 aus Figur 1 in vergrößerter Darstellung wieder. Wie ersichtlich, sind Gas-Flüssigkeits-Abscheider 48, Mehrwegeventil 50 und Kapillare 54 fest aneinander gekoppelt und können mit Hilfe des Roboterarms 60 eine vertikale Bewegung durchführen (Alternative (i)). Dadurch kann die Kapillare 54 in das Fraktioniergefäß 56 beim Sammeln der Fraktion eintauchen und anschließend wieder herausfahren. Schematisch dargestellt ist auch eine Aussparung 66 für den Anschluss eines Sortiermoduls 14.

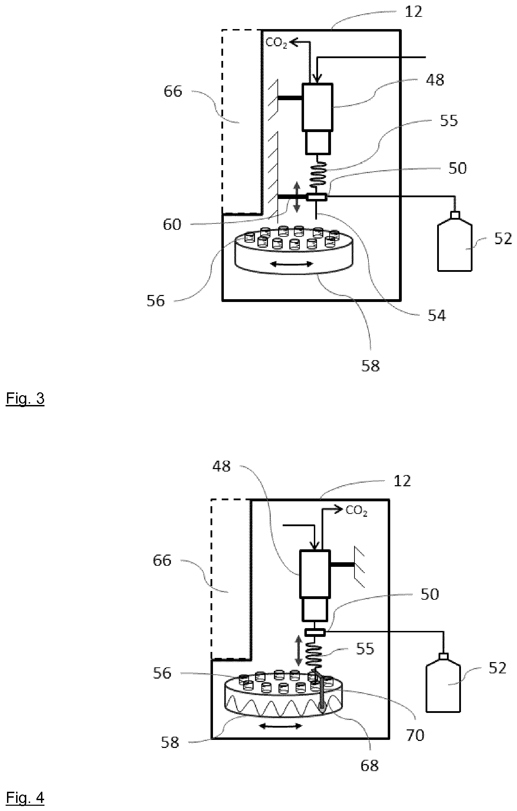

Figur 3 zeigt ein Sammlermodul 12 gemäß einer weiteren Ausführungsform, bei der der Gas-Flüssigkeits-Abscheider 48 fest am Sammlermodul 12 montiert ist, das Mehrwegeventil 50 und Kapillare 54 jedoch mit Hilfe des Roboterarms 60 eine vertikale Bewegung ausüben können (Alternative (ii)).

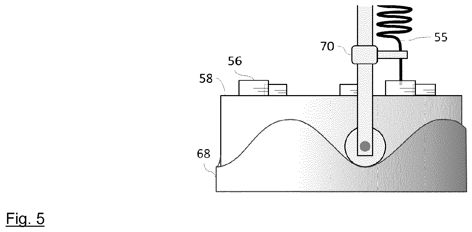

Schließlich zeigt Figur 4 ein Sammlermodul 12 in einer weiteren Ausführungsform, bei der der Gas-Flüssigkeits-Abscheider 48 und das Mehrwegeventil 50 fest am Sammlermodul 12 montiert sind, jedoch die Kapillare 54 vertikal bewegt wird (Alternative (iii)). Die vertikale Bewegung einer am Mehrwegeventil 50 angeschlossenen flexiblen Kapillare 55 wird hier durch eine Mechanik erzwungen, bei der eine Drehbewegung des Fraktioniergefäßhalters 58 ausgenutzt wird. Dazu weist der Rand des Fraktioniergefäßhalters 58 ein Wellenprofil 68 auf. Das Wellenprofil 68 und ein Laufrad mit Kapillarhalterung 70 sind so aufeinander abgestimmt, dass die Kapillare 54 in einem Wellental in das darunterliegende Fraktioniergefäß eintaucht und bei weiterdrehen des Fraktioniergefäßhalters 58 wieder herausgehoben wird (siehe dazu auch die Vergrößerung eines Teilausschnitts der Figur 4 in Figur 5).

### Bezugszeichenliste

- 10: SFC-System
- 12: Sammlermodul
- 13: Trennmodul
- 14: Sortiermodul
- 20: CO₂-Druckflasche
- 22: Wärmetauscher
- 24: CO₂-Pumpe
- 26: Lösungsmittelbehälter
- 28: Modifier-Pumpe
- 30: Vorheizung
- 32: Autosampler
- 34: Säule
- 36: Säulenofen
- 38: Detektor
- 40: Rückdruckregler
- 42: Pumpe
- 44: Lösungsmittelbehälter
- 46: Nachheizung
- 48: Gas-Flüssigkeit-Abscheider
- 50: Mehrwegeventil
- 52: Abfallgefäß
- 54: Kapillare
- 55: Flexible Kapillare
- 56: Fraktioniergefäß
- 58: Fraktioniergefäßhalter des Sammlermoduls 12
- 60: Roboterarm
- 62: Greifer
- 64: Fraktioniergefäßhalter des Sortiermoduls 14
- 66: Aussparung für Anschluss des Sortiermoduls 14
- 68: Wellenprofil am Fraktioniergefäßhalter
- 70: Laufrad mit Kapillarhalterung

## Patentansprüche

1. Sammlermodul für ein SFC-System, umfassend:
einen Gas-Flüssigkeits-Abscheider (56), der stromabwärts eines Rückdruckreglers (40) im Flussweg angeordnet ist;
ein Mehrwegeventil (50), das direkt stromabwärts an einem Auslass des Gas-Flüssigkeits-Abscheiders (48) montiert ist und dazu ausgelegt ist, den eintretenden Probenstrom entweder über eine Kapillare (54) in ein Fraktioniergefäß (56), das unter dem Gas-Flüssigkeits-Abscheider (48) positioniert ist, oder in ein Abfallgefäß (52) zu leiten; wobei
(i) der Gas-Flüssigkeits-Abscheider (48), das Mehrwegeventil und die Kapillare (54) ausgelegt sind eine gemeinsame vertikale Bewegung auszuführen, derart, dass eine Spitze der Kapillare (54) in eine Öffnung des Fraktioniergefäßes (56) eintaucht und wieder herausfährt; oder
(ii) der Gas-Flüssigkeits-Abscheider (48) fest montiert ist und das Mehrwegeventil (50) und die Kapillare (54) ausgelegt sind eine gemeinsame vertikale Bewegung auszuführen, derart, dass eine Spitze der Kapillare (54) in eine Öffnung des Fraktioniergefäßes (56) eintaucht und wieder herausfährt; oder
(iii) der Gas-Flüssigkeits-Abscheider (48) und das Mehrwegeventil (50) fest montiert sind und die Kapillare (54) ausgelegt ist eine vertikale Bewegung auszuführen, derart, dass eine Spitze der Kapillare (54) in eine Öffnung des Fraktioniergefäßes (56) eintaucht und wieder herausfährt; und
einen Fraktioniergefäßhalter (58) für eine Vielzahl von Fraktioniergefäßen (56), die elektrisch oder pneumatisch nacheinander unter der Spitze der Kapillare (54) positionierbar sind.

2. Sammlermodul für ein SFC-System nach Anspruch 1, bei dem der Fraktioniergefäßhalter (58) rund ist und im Umfang des Fraktioniergefäßhalters (58) angeordnete Aufnahmen für die Fraktioniergefäße (56) aufweist.

3. Sammlermodul für ein SFC-System nach Anspruch 1 oder 2, bei dem eine Grundplatte, auf der der Fraktioniergefäßhalter (58) angebracht ist, so ausgestaltet ist, dass sie auf einer Seite über ein Profil des Sammlermoduls (14) hinausragt.

4. Sammlermodul für ein SFC-System nach einem der vorhergehenden Ansprüche, bei dem die vertikale Bewegung durch eine Bewegung des Fraktioniergefäßhalters (58) erzwungen wird.

5. Sammlermodul für ein SFC-System nach einem der Ansprüche 1 bis 4, bei dem ein Roboterarm (60) vorhanden ist, der zur Durchführung der vertikalen Bewegung ausgelegt ist.

## Claims

1. A collector module for an SFC system, comprising:
a gas-liquid separator (48), which is arranged downstream of a back-pressure regulator (40) in the flow path;
a multiway valve (50), which is fitted directly downstream at an outlet of the gas-liquid separator (48) and is designed to direct the incoming sample stream either by way of a capillary (54) into a fractionating vessel (56) which is positioned under the gas-liquid separator (48), or into a waste vessel (52); wherein
(i) the gas-liquid separator (48), the multiway valve and the capillary (54) are designed to perform a joint vertical movement in such a way that a tip of the capillary (54) moves in and out of an opening in the fractionating vessel (56) ; or
(ii) the gas-liquid separator (48) is fitted in a fixed manner and the multiway valve (50) and the capillary (54) are designed to perform a joint vertical movement in such a way that a tip of the capillary (54) moves in and out of an opening in the fractionating vessel (56); or
(iii) the gas-liquid separator (48) and the multiway valve (50) are fitted in a fixed manner and the capillary (54) is designed to perform a vertical movement in such a way that a tip of the capillary (54) moves in and out of an opening in the fractionating vessel (56); and
a fractionating vessel holder (58) for a plurality of fractionating vessels (56), which can be electrically or pneumatically positioned one after the other under the tip of the capillary (54).

2. The collector module for an SFC system according to Claim 1, in which the fractionating vessel holder (58) is round and is furnished within the circumference of the fractionating vessel holder (58) with seating points for the fractionating vessels (56).

3. The collector module for an SFC system according to Claim 1 or 2, in which a baseplate on which the fractionating vessel holder (58) is mounted is designed in such a way that it protrudes beyond a profile of the collector module (14) on one side.

4. The collector module for an SFC system according to any one of the preceding claims, in which the vertical movement is compelled by a movement of the fractionating vessel holder (58).

5. The collector module for an SFC system according to any one of Claims 1 to 4, in which a robot arm (60) is present and is designed to perform the vertical movement.

## Revendications

1. Module collecteur pour un système de chromatographie en phase liquide supercritique (CPLS) comprenant :
un séparateur gaz-liquide (48), qui est disposé dans la trajectoire d'écoulement en aval d'un régulateur de pression de retour (40),
une vanne multivoie (50), qui est montée directement en aval sur une sortie du séparateur gaz-liquide (48) et est conçue à cet effet pour diriger le flux d'échantillons entrant soit par le biais d'un capillaire (54) dans un récipient de fractionnement (56), qui est positionné sous le séparateur gaz-liquide (48), soit dans un récipient à déchets (52), sachant que
(i) le séparateur gaz-liquide (48), la vanne multivoie et le capillaire (54) sont conçus pour exécuter un mouvement vertical commun de telle manière qu'une pointe du capillaire (54) pénètre dans une ouverture du récipient de fractionnement (56) et ressorte, ou
(ii) le séparateur gaz-liquide (48) est monté fixement et la vanne multivoie (50) et le capillaire (54) conçus pour exécuter un mouvement vertical commun de telle manière qu'une pointe du capillaire (54) pénètre dans une ouverture du récipient de fractionnement (56) et ressorte, ou
(iii) le séparateur gaz-liquide (48) et la vanne multivoie (50) sont montés fixement et le capillaire (54) est conçu pour exécuter un mouvement vertical commun de telle manière qu'une pointe du capillaire (54) pénètre dans une ouverture du récipient de fractionnement (56) et ressorte, et
un support de récipients de fractionnement (58) pour une pluralité de récipients de fractionnement (56), qui sont positionnés électriquement ou pneumatiquement les uns après les autres sous la pointe du capillaire (54) .

2. Module collecteur pour un système CPLS selon la revendication 1 pour lequel le support de récipient de fractionnement (58) est rond et comporte des logements disposés dans la périphérie du support de récipients de fractionnement (58) pour les récipients de fractionnement (56).

3. Module collecteur pour un système CPLS selon la revendication 1 ou 2, pour lequel une plaque de base sur laquelle est monté le support de récipients de fractionnement (58), est conçue de telle manière qu'elle dépasse sur un côté au-dessus d'un profilé du module collecteur (14).

4. Module collecteur pour un système CPLS selon l'une quelconque des revendications précédentes pour lequel le mouvement vertical est contraint par un mouvement du support de récipients de fractionnement (58).

5. Module collecteur pour un système CPLS selon l'une quelconque des revendications 1 à 4 pour lequel un bras de robot (60) est présent, qui est conçu pour l'exécution du mouvement vertical.
